# EUROPÄISCHE PATENTANMELDUNG

(11) **EP 0 849 035 A1**
(43) Veröffentlichungstag der Anmeldung: **24.06.1998**
(21) Anmeldenummer: 96120692.7
(22) Anmeldetag: 20.12.1996
(51) Int. Cl.: B23Q 17/22, B23Q 1/38

(54) **Voreinstellgerät für Werkzeuge**

(71) Anmelder: PWB AG PRAEZISIONS-WERKZEUG-BAU, CH-9450 Altstätten (CH)
(72) Erfinder: Graf, Helmuth, 9436 Balgach (CH)
(74) Vertreter: Stocker, Kurt

(57) **Zusammenfassung**

Das Voreinstellgerät (1) gewährleistet die Drehbarkeit des Werkzeuges (6) durch ein Luftlager. Die zum Vermessen gewünschte Drehausrichtung erfolgt bei einem aufgebauten Luftlager mit kleinem Kraftaufwand. Nach dem Erreichen der gewünschten Drehausrichtung wird die Druckluftzufuhr zum Luftlager ausgeschaltet, bzw. die Zuführleitung (19) mit der Umgebung verbunden. Dabei gelangt das Werkzeug in eine Auflageposition, in der zwei einander zugeordnete Lagerflächen (11, 12a; 11a, 21a; 11b, 21b) aneinander anliegen und unerwünschte Drehbewegungen aufgrund des dazu nötigen grossen Kraftaufwandes verhindern. In der Auflageposition ist das Werkzeug (6) exakt vermessbar und es kann ohne Verdrehungsgefahr unter ständiger Messkontrolle eingestellt werden. Zum Bereitstellen des Luftlagers ist in der unteren, bzw. äusseren Lagerfläche (11, 11a, 11b) ein Verteilkanal (18, 18a, 18b) ausgebildet, der von einer mit einem Schaltventil (16) ein- und ausschaltbaren Druckluft-Versorgung (13) gespiesen wird, die eine Druckluftquelle (14), ein daran anschliessendes Drosselventil (15) zum Beschränken des Luftdurchsatzes und einen zwischen dem Drosselventil (15) und dem Schaltventil (16) angeordneten Druckspeicher (17), der auch bei einem kleinen Luftdurchsatz eine zum Aufbauen des Luftlagers benötigte Druckluftmenge bereitstellt, umfasst.

## Beschreibung

Die Erfindung bezieht sich auf ein Voreinstellgerät nach dem Oberbegriff des Anspruches 1.

Voreinstellgeräte werden in Bearbeitungszentren verwendet, in denen verschiedene austauschbare Werkzeuge einsetzbar sind. Die Werkzeuge werden vor dem Gebrauch in einem Voreinstellgerät vermessen und/oder eingestellt. Dazu werden die Werkzeuge mit ihrem Anschlussbereich, insbesondere einem kegeligen Lagerzapfen, von oben in eine entsprechende, insbesondere konische, Aufnahmevertiefung gesteckt. Die Werkzeugachse muss dabei in eine definierte Richtung ausgerichtet sein und das Werkzeug muss zum Vermessen um die Werkeugachse gedreht werden können.

Wenn das Werkzeug direkt in eine Lagerbüchse eingesetzt wird, ist eine Drehung um die Werkzeugachse, insbesondere bei Werkzeugen mit grossem Eigengewicht, nur mit grossem Kraftaufwand möglich, da die Reibung zwischen der Lagerzapfenoberfläche und der Konusinnenfläche der Lagerbüchse oder einer Lagerhülse sehr hoch ist. Eine genaue Drehausrichtung ist kaum möglich, weil aufgrund der benötigten grossen Drehkraft Drehungen um kleine Winkel kaum exakt möglich sind. Um die gewünschten Drehausrichtungen mit kleinem Kraftaufwand exakt einstellen zu können, sind Lösungen mit Drehlagern vorgeschlagen worden.

Eine Lösung gemäss der DE-A-951 151 sieht vor, dass das Werkzeug in die konische Bohrung einer Reduktionshülse eingesteckt wird. Die Reduktionshülse ist mit ihrer zylindrischen Aussenmantelfläche über eine Wälzlagereinheit innerhalb einer zylindrischen Bohhrung eines Aufnahmeteils abgestützt. Zur exakten Ausrichtung der Drehachse, und somit der Werkzeugachse, müssen zwei genauestens übereinstimmende Wälzlager vorgesehen werden. Derartige Wälzlagereinheiten sind teuer und es besteht zudem die Gefahr, dass die Lagereinheit einen Rundlauffehler aufweist, wodurch die zum genauen Vermessen benötigte Rundlaufgenauigkeit nicht mehr gewährleistet ist.

Eine Lösung gemäss der EP-B-498 232 sieht vor, dass zwischen dem kegeligen Werkzeug-Lagerzapfen und einer entsprechenden Innenmantelfläche einer Lagerbüchse ein hülsenartiges Nadellager mit einer Nadellagerhülse und einer Anzahl von darin gehaltenen Nadelrollen angeordnet ist. Das Werkzeug ist dabei genau ausgerichtet und kann mit kleinem Kraftaufwand exakt gedreht werden.

Der Nachteil der bekannten Drehlager für die Werkzeugaufnahme besteht darin, dass sich ein Werkzeug beim Einstellen, bzw. beim Ausrichten und Festsetzen eines Bearbeitungsteiles in der gewünschten Lage, leicht um die Werkzeug- bzw. Lagerachse dreht. Beim nachträglichen Kontrollieren der eingestellten Lage des Bearbeitungsteiles wird das Werkzeug wieder in die gewünschte Drehausrichtung gebracht. Erst dann wird ein Einstellfehler erkannt, der sich ergibt, wenn das Bearbeitungsteil beim Festsetzen, bzw. Festschrauben verrutscht, oder wenn das Werkzeug bereits beim Ausrichten des Bearbeitungsteiles etwas verdreht war. Die leichte Drehbarkeit führt dazu, dass das Einstellen und anschliessende Kontrollieren gegebenenfalls mehrmals wiederholt werden muss.

Die Aufgabe der Erfindung besteht nun darin, ein Voreinstellgerät zu finden, das sowohl das Drehen des Werkzeuges mit kleinem Kraftaufwand, als auch ein effizientes Einstellen ermöglicht.

Die Lösung der Aufgabe gelingt durch die Verwirklichung der Merkmale des Anspruches 1.

Bei der Lösung der Aufgabe wurde erkannt, dass die leichte Drehbarkeit nur zum Drehen des Werkzeuges in eine gewünschte Drehausrichtung benötigt wird. Beim Vermessen und insbesondere beim Einstellen ist die leichte Drehbarkeit eine Fehlerquelle und somit unerwünscht. Indem die Drehbarkeit des Werkzeuges durch ein Luftlager gewährleistet wird, kann die Drehbarkeit durch das Auf- bzw. Abbauen des Luftlagers erleichtert bzw. erschwert werden. Die Drehausrichtung erfolgt bei einem aufgebauten Luftlager. Nach dem Erreichen der gewünschten Drehausrichtung wird die Druckluftzufuhr zum Luftlager ausgeschaltet, insbesondere indem die Zuführleitung mit der Umgebung verbunden wird. Dabei gelangt das Werkzeug in eine Auflageposition, in der es nur mit grossem Kraftaufwand verdrehbar ist und in der es in einer definierbaren, exakten Höhe in der Aufnahme-Vorrichtung aufliegt. In der Auflageposition ist das Werkzeug exakt vermessbar und es kann ohne Verdrehungsgefahr unter ständiger Messkontrolle eingestellt werden. Der Einstellaufwand wird dadurch gegenüber den Lösungen gemäss dem Stande der Technik deutlich verkleinert.

Zum Aufbauen des Luftlagers wird zumindest eine ein- und ausschaltbare Druckluftquelle - wie einen Kompressor, oder eine Druckflasche - benötigt, von der Druckluft zwischen zwei, um die Lager- bzw. Werkzeugachse rotationssymmetrisch angeordnete, einander zugeordnete Lagerflächen führbar ist. Die Lagerflächen müssen zumindest in einem axialen Teilbereich eine quer zur Werkzeug- bzw. Drehachse verlaufende Erzeugende haben, so dass die Lagerflächen ohne Druckluft-Zufuhr durch die Gewichtskraft des Werkzeuges gegeneinander gepresst werden, wodurch eine gewünschte Reibungskraft gegenüber Drehung gewährleistet wird. Wenn die reibungswirksamen, bzw. im druckluftlosen Zustand aneinander anliegenden, Lagerflächen konisch ausgebildet sind, liegen sie zentriert aufeinander und gewährleisten damit, dass die Werkzeugachse immer gleich angeordnet ist. Beim Eintragen von Druckluft zwischen die beiden Lagerflächen entsteht ein Luftpolster, das die Reibungskraft zwischen den beiden Lagerflächen vernachlässigbar klein macht.

Beim Aufbauen des Luftpolsters muss die obere Lagerfläche und damit das Werkzeug etwas angehoben werden. Um die dazu nötige Kraft erzeugen zu können, müssen die Lagerflächen eine minimale Grösse und einen Flächenanteil mit einer Erzeugenden haben, die quer zur Werkzeugachse verläuft. Es ist auch eine im wesentlichen horizontale Ausrichtung, bzw. entlang einer Normalebene der Werkzeugachse möglich, wobei dann aber zur Drehführung noch mindestens zwei weitere, einander zugeordnete, Lagerflächen nötig sind, zwischen denen vorzugsweise ein zylindrisches Luftlager aufbaubar ist.

Entsprechend den Lagerflächen und dem Gewicht des Werkzeuges muss zumindest ein minimaler Luftdruck bereit gestellt werden. Ein zu grosser Druck zusammen mit einem zu grossen Luftdurchsatz könnte zu Vibrationen zwischen den Lagerflächen führen. Bei einem gedrosselten Durchsatz kann mit einem zu höheren Drücken hin weiteren Druckbereich gearbeitet werden. Da zum Aufbauen des Luftpolsters kurzzeitig ein grösserer Luftdurchsatz benötigt wird, umfasst die Druckluft-Versorgung vorzugsweise einen Druckspeicher, bzw. ein mit Druckluft gefülltes Volumen, von dem die Druckluft im wesentlichen ungedrosselt zwischen die Lagerflächen strömen kann. Bei exakt aneinander anschliessenden Lagerflächen wird zum Aufrechterhalten eines aufgebauten Luftlagers nur ein sehr kleiner Luftdurchsatz benötigt. Entsprechend klein wird auch der durch das Luftpolster beanspruchte Ringspalt zwischen den Lagerflächen. Aufgrund der kleinen Spaltdicke, wird auch das Werkzeug nur wenig angehoben.

Die Zuführung der Druckluft ist vorzugsweise so gestaltet, dass die Luftpolster rotationssymmetrisch um die Lagerachse verlaufen. Dazu wird vorzugsweise in je einer Lagerfläche, insbesondere der festen, bzw. der unteren oder äusseren, ein um die Lagerachse führender Verteilkanal für Druckluft angeordnet, der gegen die gegenüberliegende Lagerfläche offen ist und zumindest über eine Zuführleitung mit Druckluft speisbar ist.

Die Druckluft-Versorgung ist mit einer Schaltvorrichtung, vorzugsweise einem Schaltventil, ein- und ausschaltbar und umfasst zumindest eine Druckluftquelle, vorzugsweise ein daran anschliessendes Drosselventil zum Beschränken des Luftdurchsatzes und insbesondere einen zwischen dem Drosselventil und dem Schaltventil angeordneten Druckspeicher. Die Schaltvorrichtung besteht gegebenenfalls lediglich aus einem Ein/Aus-Schalter der Druckluftquelle.

Die Zeichnungen erläutern die Erfindung anhand schematisch dargestellter Beispiele. Dabei zeigt
- Fig. 1:: eine Ansicht eines Voreinstellgerätes mit einem Luftlager zum Halten des Werkzeuges und einer Druckluft-Speisungs-Vorrichtung;
- Fig. 2:: einen vertikalen Schnitt durch eine konische Lagerbüchse mit einem direkt darin gehaltenen kegeligen Lagerzapfen;
- Fig. 3:: einen vertikalen Schnitt durch eine Lagerbüchse mit einem zylindrischen und einem konischen Teilbereich und einer darin eingesetzten Lagerhülse; und
- Fig. 4:: einen vertikalen Schnitt durch eine Lagerbüchse mit einem zylindrischen und einem konischen Teilbereich, einer darin eingesetzten Lagerhülse in die wiederum ein Adapter zur Aufnahme von Werkzeugen mit einem Hohlschaft-Anschlussbereich eingesetzt ist.

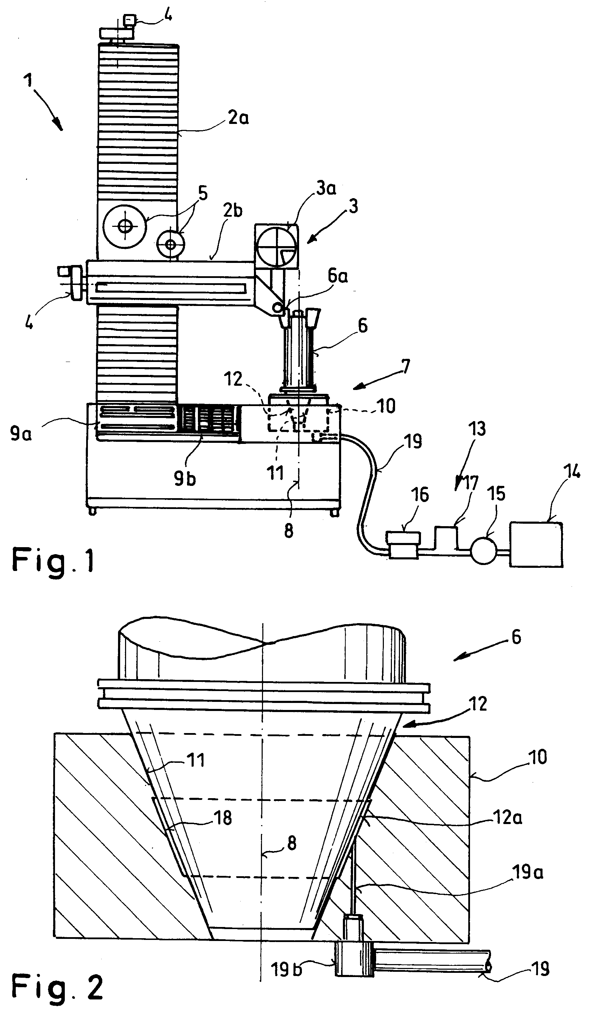

Fig. 1 zeigt ein Voreinstellgerät 1 mit einer vertikalen und einer horizontalen Verstell- und Messeinheit 2a, 2b, die so ausgebildet und miteinander verbunden sind, dass ein Projektor 3, bzw. dessen Projektionsstrahl, an jede Position einer vertikalen Teilebene bewegbar ist. Zum Bewegen des Projektors 3 sind Grob- und Feinverstellknöpfe 4 und 5 vorgesehen. Auf einem Darstellungsbereich 3a mit Fadenkreuz wird die Lage eines Werkzeuges 6, bzw. dessen Bearbeitungsteiles 6a angezeigt, wenn das Bearbeitungsteil 6a im Projektionsstrahl des Projektors 3 angeordnet ist. Das Werkzeug 6 ist in einer Aufnahme-Vorrichtung 7 gehalten und steht entlang der Werkzeug- bzw. Lagerachse 8 im wesentlichen senkrecht nach oben. Die Lage des Projektors 3 wird in einem Anzeigefeld 9a, vorzugsweise mit Komponenten entlang der Werkzeugachse 8 und einer dazu senkrecht stehenden Achse der vertikalen Teilebene angezeigt. Um die gewünschten Messvorgänge und das Speichern erfasster Werte zu vereinfachen, ist vorzugsweise ein Eingabefeld 9b, eine Messsteuerung und ein Speicher vorgesehen.

Die Aufnahme-Vorrichtung 7 umfasst in der dargestellten Ausführungsform lediglich eine Lagerbüchse 10 mit einer um die Lagerachse 8 rotationssymmetrisch, vorzugsweise konisch, ausgebildeten Lagerfläche 11. Der Lagerfläche 11 ist als zweite Lagerfläche die kegelige Aussenfläche des Lagerzapfens 12 des Werkzeuges 6 zugeordnet. Um zwischen den beiden Lagerflächen ein Luftlager aufbauen zu können, ist eine Druckluft-Versorgung 13 vorgesehen, die zumindest eine Druckluftquelle 14, vorzugsweise ein daran anschliessendes Drosselventil 15 zum Beschränken des Luftdurchsatzes und insbesondere einen zwischen dem Drosselventil 15 und einem Schaltventil 16 angeordneten Druckspeicher 17, der auch bei einem kleinen Luftdurchsatz eine zum Aufbauen des Luftlagers benötigte Druckluftmenge bereitstellt, umfasst. Das Schaltventil ist vorzugsweise so ausgebildet und angeordnet, dass es mit einem Fuss oder gegebenenfalls mit einer Hand, bzw. einem Finger betätigbar ist. Das Werkzeug wird beim Ausschalten des Luftlagers mit einer oder beiden Händen gehalten.

Fig. 2 zeigt die Aufnahme-Vorrichtung gemäss Fig. 1 mit der Lagerbüchse 10, in deren konischen Lagerfläche 11 ein gegen die Lagerachse 8 offener, nutförmiger Verteilkanal 18 ausgebildet ist. Der Verteilkanal 18 führt ringförmig um die Lagerachse 8 und hat einen Querschnitt, der gewährleistet, dass der Druck beim Zuführen von Druckluft auf dem gesamten Umfang im wesentlichen gleich gross ist. Der Lagerfläche 11 ist als zweite Lagerfläche die kegelige Aussenfläche 12a des Lagerzapfens 12 des Werkzeuges 6 zugeordnet. Um zwischen den beiden Lagerflächen ein Luftlager aufbauen zu können, ist die Druckluft-Versorgung über eine Zuführleitung 19, ein Anschlussstück 19b und eine Zuführbohrung 19a in der Lagerbüchse 10 mit dem Verteilkanal 18 verbunden. Vom druckbeaufschlagten Verteilkanal 18 strömt die Luft durch einen sich bildenden dünnen Ringspalt zwischen den beiden Lagerflächen 11 und 12a gegen die beiden Abschlussflächen der Lagerbüchse 10.

Anstelle des Verteilkanales 18 könnten in der unteren Lagerfläche 11 gegebenenfalls mehrere, vorzugsweise in gleichen Winkelabständen um die Lagerachse 8 verteilte, Austrittsöffnungen von Zuführbohrungen 19a vorgesehen sein. Gegebenenfalls wäre es auch möglich bei einer unten geschlossenen Lagerbüchse 10 lediglich eine zentrale Austrittsöffnung vorzusehen, von der die Luft dann zwischen den Lagerflächen gegen das obere offene Ende der Lagerbüchse 10 strömen würde. Selbst wenn bei einer derartigen Druckluft-Zuführung der Lagerzapfen 12 nach dem Anheben nicht exakt parallel zur Lagerachse 8 ausgerichtet wäre, könnte er mit einem kleinen Drehmoment in eine gewünschte Drehausrichtung gebracht werden. Zum Vermessen wird die Druckluftzufuhr unterbrochen, so dass die Lagerflächen 11, 12a aneinander anliegen und die Werkzeugachse wieder mit der Lagerachse 8 zusammenfällt.

Die Konusform der Lagerfläche 11 der Lagerbüchse 10 ist vorzugsweise an die Konizität eines Standart-Lagerzapfens, wie etwa eines ISO-Steilkegels angepasst, so dass die Lagerzapfen 12 direkt in die Lagerbüchse 10 eingesetzt werden können. Um andere Standart-Lagerzapfen lagern zu können wird eine Adapterhülse in die Lagerbüchse 10 eingesetzt, wobei die Aussenfläche der Adapterhülse an die Innenfläche der Lagerbüchse 10 und die Innenfläche der Adapterhülse an die Aussenfläche eines Lagerzapfens 12 angepasst ist. Die Adapterhülse gehört somit zur Aufnahme-Vorrichtung 7 und das Luftlager wird zwischen der Lagerbüchse 10 und der Adapterhülse ausgebildet.

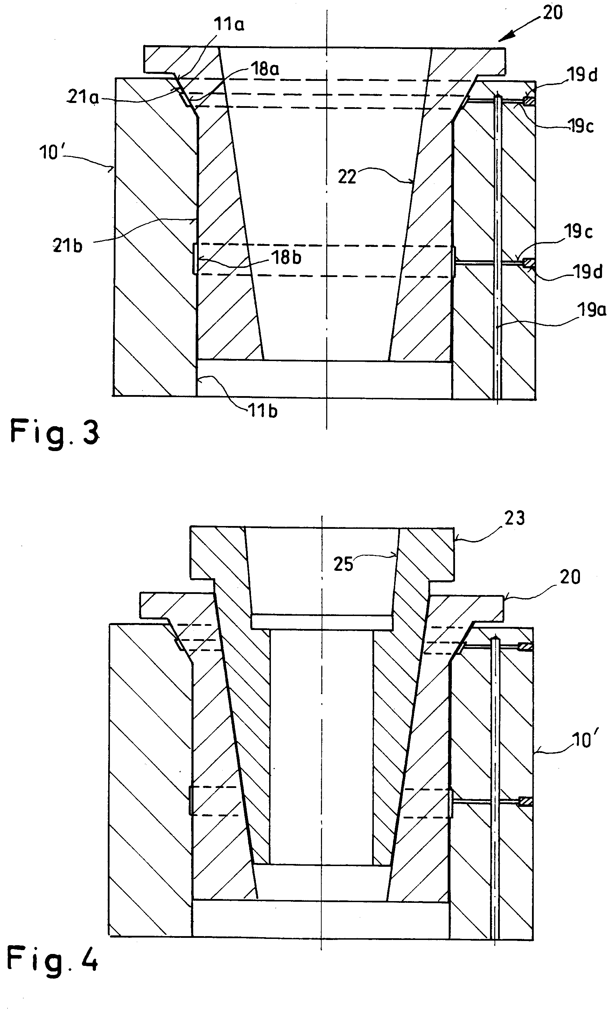

Fig. 3 zeigt eine Ausführungsform einer kostengünstigen Aufnahme-Vorrichtung für die verschiedenartigsten Werkzeug-Anschlussbereiche. Dabei ist die Innenfläche der Lagerbüchse 10' lediglich in einem kleinen axialen Bereich als konische Lagerfläche 11a und in einem grossen axialen Bereich als zylindrische Lagerfläche 11b ausgebildet. Diesen beiden Lagerflächen 11a und 11b ist je ein Verteilkanal 18a bzw. 18b zugeordnet. Die Speisung dieser Verteilkanäle 18a, 18b erfolgt über eine axial verlaufende Bohrung 19a und je eine radial verlaufende Bohrung 19c, die radial aussen mit einem Abschlusselement 19d dicht verschlossen ist. Um nun Standart-Lagerzapfen verschiedener Konizität lagern zu können, sind Lagerhülsen 20 vorgesehen, deren Aussenflächen 21a und 21b als Lagerflächen an die konische bzw. zylindrische Lagerfläche 11a bzw. 11b der Lagerbüchse 10' angepasst sind. Die Innenfläche 22 jeder Lagerhülse 20 passt je an eine Standart-Lagerzapfenform.

Die einander zugeordneten konischen Lagerflächen 11a bzw. 21a der Lagerbüchse 10' bzw. der Lagerhülse 20 gewährleisten im luftlosen Zustand das gewünschte Festsitzen und mit dem Luftpolster die reibungsfreie Drehbarkeit der Lagerhülse 20, bzw. eines darin eingesetzten Werkzeuges. Um einen guten Rundlauf zu gewährleisten wird zum Drehen auch zwischen den beiden zylindrischen Lagerflächen 11b und 21b ein Luftpolster aufgebaut. Der konische Lagerbereich ist vorzugsweise direkt am oberen Rand der Lagerbüchse 10' angeordnet. Gegebenenfalls wird er aber im unteren oder mittleren Bereich der Lagerbüchse angeordnet. Der Vorteil der beschriebene Anordnung mit einer Lagerbüchse 10' und einer Lagerhülse 20 besteht darin, dass ein zylindrischer Lagerbereich einfacher und günstiger hergestellt werden kann als ein konischer. Zudem kann die Konizität und die Grösse des konischen Lagerbereiches unabhängig von der Ausbildung von Standart-Lagerzapfen so gewählt werden, dass ein optimales Festsetzen und Luftlagern möglich ist. Wenn das Luftlager zwischen der Lagerbüchse 10' und einer Lagerhülse 20 aufgebaut wird, ist die Gefahr, dass die Lagerflächen 11a, 11b, 21a, 21b beschädigt sind und das Luftlager beeinträchtigt wird, sehr klein, weil diese Lagerflächen nicht stark beansprucht werden.

Fig. 4 zeigt eine Ausführungsform der Aufnahme-Vorrichtung bei der ein Adapter 23 in die Lagerhülse 20 eingesetzt ist. Die Lagerhülse 20 ist, wie in Fig. 3 in der Lagerbüchse 10' drehbar gelagert. Es versteht sich von selbst, dass der Adapter 23 auch direkt in eine an die Aussenform des Adapters 23 angepasste Lagerbüchse 10 eingeführt sein könnte. Der Adapter 23 hat eine Standart-Aussenform, vorzugsweise einen ISO-Steilkegel, und innen irgend eine andere standardisierte Aufnahme mit einer Anschlussfläche 25 zur Aufnahme eines speziellen Werkzeug-Anschlussbereiches, wie etwa eines konischen Hohlschaftes.

Es versteht sich von selbst, dass die beschriebene Luftlagerung auch zusammen mit beliebigen anderen bekannten Voreinstellgeräten, insbesondere auch mit Messtaster-Systemen zu einem erfindungsgemässen Gerät führt.

## Patentansprüche

1. Voreinstellgerät für Werkzeuge mit einer Aufnahme-Vorrichtung zum Halten eines Werkzeuges (6), wobei das Werkzeug (6) zum Vermessen oder Einstellen um eine im wesentlichen vertikale Lagerachse (8) in eine gewünschte Drehausrichtung drehbar ist und die Aufnahme-Vorrichtung eine Lagerbüchse (10, 10') mit einer um die Lagerachse (8) rotationssymmetrisch ausgebildeten Lagerfläche (11, 11a,11b) umfasst, **dadurch gekennzeichnet, dass** ein Mittel zum Aufbauen eines Luftlagers vorgesehen ist, welches Luftlager das Werkzeug (6) drehbar macht.

2. Voreinstellgerät nach Anspruch 1, **dadurch gekennzeichnet, dass** das Mittel zum Aufbauen eines Luftlagers in der Lagerfläche (11, 11a ,11b) zumindest einen um die Lagerachse (8) führenden Verteilkanal (18, 18a, 18b) für Druckluft umfasst, wobei jeder Verteilkanal (18, 18a, 18b) zumindest über eine Zuführleitung (19, 19a, 19c) mit Druckluft speisbar ist.

3. Voreinstellgerät nach Anspruch 1 oder 2, **dadurch gekennzeichnet, dass** das Mittel zum Aufbauen eines Luftlagers eine mit einer Schaltvorrichtung ein- und ausschaltbare Druckluft-Versorgung (13) umfasst, die zumindest eine Druckluftquelle (14), vorzugsweise ein daran anschliessendes Drosselventil (15) zum Beschränken des Luftdurchsatzes und insbesondere einem an das Drosselventil (15) anschliessenden Druckspeicher (17), der auch bei einem kleinen Luftdurchsatz eine zum Aufbauen des Luftlagers benötigte Druckluftmenge bereitstellt, umfasst.

4. Voreinstellgerät nach Anspruch 3, **dadurch gekennzeichnet, dass** die Schaltvorrichtung ein Schaltventil (16) umfasst, das vorzugsweise zwischen dem Druckspeicher (17) und der Lagerfläche (11, 11a, 11b) angeordnet ist.

5. Voreinstellgerät nach einem der Ansprüche 1 bis 4, **dadurch gekennzeichnet, dass** die Lagerfläche (11, 11a, 11b) zumindest einen konischen Teilbereich (11a), gegebenenfalls aber zumindest einen weiteren Teilbereich (11b), der vorzugsweise zylindrisch, gegebenenfalls aber konisch, insbesondere mit einer anderen Konizität, ausgebildet ist, umfasst, wobei vorzugsweise jedem Teilbereich (11a, 11b) mindestens ein Verteilkanal (18a, 18b) zugeordnet ist.

6. Voreinstellgerät nach einem der Ansprüche 1 bis 5, **dadurch gekennzeichnet, dass** die Lagerfläche (11) an die kegelige Aussenkontur (12a) von Werkzeuglagerzapfen (12) angepasst ist, und das Luftlager zwischen der Lagerfläche (11) und dem Werkzeuglagerzapfen (12) aufbaubar ist.

7. Voreinstellgerät nach einem der Ansprüche 1 bis 5, **dadurch gekennzeichnet, dass** die Aufnahme-Vorrichtung eine in die Lagerbüchse (10') einsetzbare Lagerhülse (20) umfasst und das Luftlager zwischen der Lagerfläche (11a, 11b) und der Aussenfläche (21a, 21b) der Lagerhülse (20) aufbaubar ist.

8. Voreinstellgerät nach einem der Ansprüche 1 bis 7, **dadurch gekennzeichnet, dass** die Aufnahme-Vorrichtung einen Adapter (23) umfasst, der in die Lagerbüchse (10) oder in die Lagerhülse (20) einsetzbar ist und zur Aufnahme eines speziellen Werkzeug-Anschlussbereiches, wie etwa eines konischen Hohlschaftes, ausgebildet ist.
